# EUROPEAN PATENT SPECIFICATION

(11) **EP 1 828 901 B1**
(45) Date of publication and mention of the grant of the patent: **14.01.2009**
(21) Application number: 05852009.9
(22) Date of filing: 17.11.2005
(51) Int. Cl.: G06F 11/14

(54) **PREVENTION OF DATA LOSS DUE TO POWER FAILURE**
VERHINDERUNG VON DATENVERLUST AUFGRUND VON STROMAUSFALL
PREVENTION DES PERTES DE DONNEES DUES A UNE PANNE DE COURANT

(30) Priority: 03.12.2004 US 4710
(43) Date of publication of application: 05.09.2007
(73) Proprietor: Intel Corporation, Santa Clara, CA 95052 (US)
(72) Inventor: POISNER, David, Folsom, California 95630 (US); STEVENS, William, Folsom, California 95630 (US)
(74) Representative: Beresford, Keith Denis Lewis
(86) International application number: PCT/US2005/042314
(87) International publication number: WO 2006/060237

(56) References cited:
- EP-A- 0 518 339
- WO-A-99/67703
- US-A- 5 175 853
- US-A- 5 283 792
- US-A1- 2004 054 851

## Description

### BACKGROUND

### 1. FIELD

The present disclosure relates generally to data preservation in a computing system and, more specifically, to prevention of data loss due to power failure.

### 2. DESCRIPTION

Most desktop computers and servers use a power supply with an alternating current (AC) input source and a direct current (DC) output. When AC power fails, and hence the DC power fails, data that is in most varieties of dynamic and static memory will be lost unless steps are taken to quickly store the data in a non-volatile memory. A variety of schemes have been developed to handle AC power failures. One scheme is to use an uninterruptible power supply (UPS) which continues supplying DC power to a computer when its AC power fails. However, a UPS requires a fairly large volume, large weight, and extra USB or serial-port cables to report when the battery is reaching depletion. Also the cost of a UPS may make it unattractive to many individual personal computer (PC) users.

Another scheme attempts to build a smaller and cheaper "UPS" inside the box. Such an inside-box "UPS" is smaller and cheaper compared to a traditional UPS because it can skip the AC-to-DC stage in the traditional UPS, and it does not need an extra cable, a box, or voltage regulators. However, this scheme requires the capacity of an inside-box "UPS" be large enough so that a computer may be able to copy all data in volatile memory devices to non-volatile memory devices (such as disks) after AC power fails. The inside-box "UPS" need also support a very high current drain. Inexpensive batteries are not optimized for both high drain and high capacity.

Yet another scheme may be using a non-volatile memory for main memory, but there are no existing technologies that can make this scheme close in performance or cost to using a volatile memory (e.g., dynamic random access memory (DRAM)) for main memory. Yet another scheme may be to immediately copy content of a volatile main memory to a non-volatile main memory when AC power fails. This scheme, however, would almost double memory cost because both a volatile main memory and a non-volatile main memory are required. All of these schemes do not satisfy individual PC users because of cost, performance, and weight concerns.

US-A-5283792 describes a power failure control system for a CPU and external memory which uses a controller to detect a power failure situation and cause the CPU to store critical instructions in an internal memory array constituting a hidden memory during a power down sequence.

Dirty cache lines are not flushed to the main memory and the power supply is not turned off for all components except the main memory.

In the system described in WO99/67703 the energy for the state saving operations comes from a backup battery and no completion of pending memory write operation is foreseen.

US 2004/0054851 A describes managing cache levels based on battery backup level by adjusting the storage level of a cache in response to detecting change in battery charge level to ensure adequate battery power is available to transfer the contents of cache to non volatile data storage.

Aspects of the present invention are set out in the appended independent claims.

### BRIEF DESCRIPTION OF THE DRAWINGS

The features and advantages of the present disclosure will become apparent from the following detailed description of the present disclosure in which:
Figure 1 illustrates a general computing system which may use a battery pack to prevent data loss due to power failure;
Figure 2 illustrates an example structure of a hardware virtualization environment;
Figure 3 illustrates main functional components in a computing system which may work together to prevent data loss due to power failure; and
Figure 4 illustrates a flowchart of an example process of preventing data loss due to power failure for a computing system.

### DETAILED DESCRIPTION

When an AC power failure occurs to a computing system (e.g., a desktop computer and/or a server), the inductance and capacitance of the AC power supply can typically maintain the DC output power for the computing system for a short period of time after such a failure is detected and before the DC power supply becomes invalid. During this short period of time, any pending memory write operations may be completed and "dirty" cache lines, those cache lines that do not match their corresponding values in main memory, may be flushed to the main memory of the computing system. Subsequently, the computing system is put in a loss-prevention state under which power of all components except the main memory in the computing system may be turned off. Typically, the main memory comprises volatile memory, such as DRAM, in which data needs to be periodically refreshed to prevent data losses. In the loss-prevention state, the DRAM requires a low-level of power and is able to perform a self-refresh operation to avoid loss of data.

A battery pack is used to provide power when the computing system is in the loss-prevention state. The battery pack includes two or three AA-size batteries or batteries of other sizes/types. The battery pack may include batteries that are rechargeable or non-rechargeable. If the computing system has a write-back cache in a processor or a disk drive, data in the write-back cache may also be refreshed using power supplied by the battery pack under the loss-prevention state. When the AC power supply returns, and hence the DC power returns, the computing system may resume working based on data stored in the main memory. If the battery pack is made using non-rechargeable batteries, a warning may be given out when the batteries are near depletion. The user of the computing system may then replace the batteries. The user would also be advised not to enter any new data into the computer until the batteries had been replaced, as the data would not be adequately protected against loss in case of an AC power failure.

Reference in the specification to "one embodiment" or "an embodiment" of the disclosed techniques means that a particular feature, structure or characteristic described in connection with the embodiment is included in at least one embodiment of the disclosed techniques. Thus, the appearances of the phrase "in one embodiment" appearing in various places throughout the specification are not necessarily all referring to the same embodiment.

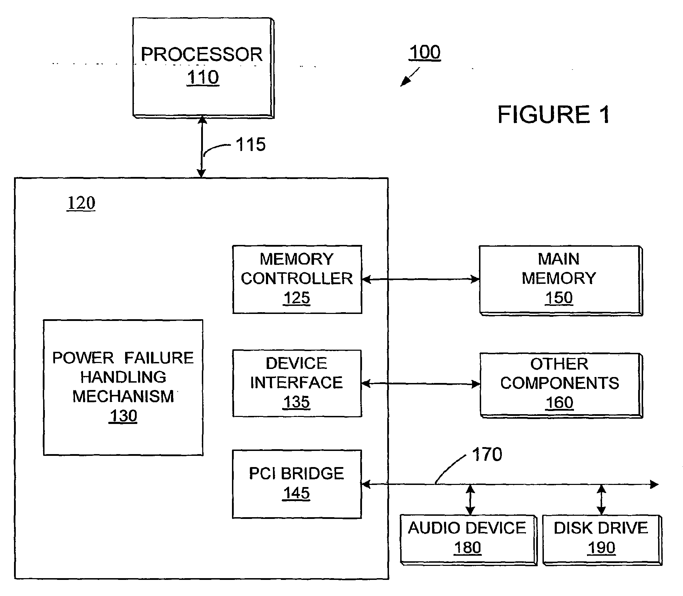

Figure 1 illustrates a general computing system 100 which may use a battery pack to prevent data loss due to power failure. Note that the details shown in the figure are not required and systems with different details may be used. Although not shown, the computing system 100 is envisioned to receive electrical power from an alternating current (AC) source (e.g., by connecting to an electrical outlet). The computing system comprises one or more processors 110 coupled to a bus 115. Processor 110 may comprise a variety of different types (e.g., For Pentium® family processors).

The computing system 100 may also include a chipset 120 coupled to the bus 115. The chipset 120 may include one or more integrated circuit packages or chips. The chipset 120 may comprise one or more device interfaces 135 to support data transfers to and/or from other components 160 of the computing system 100 such as, for example, BIOS firmware, keyboards, mice, storage devices, network interfaces, etc. The chipset 120 may be coupled to a Peripheral Component Interconnect (PCl) bus 170. The chipset set 120 may include a PCl bridge 145 that provides an interface to the PCI bus 170. The PCI Bridge 145 may provide a data path between the CPU 110 as well as other components 160, and peripheral devices such as, for example, an audio device 180 and a disk drive 190. Although not shown, other devices may also be coupled to the PCI bus 170.

Additionally, the chipset 120 may comprise a memory controller 125 that is coupled to a main memory 150. The main memory 150 may store data and sequences of instructions that are executed by the processor 110 or any other device included in the system. The memory controller 125 may access the main memory 150 in response to memory transactions associated with the processor 110, and other devices in the computing system 100. In one embodiment, memory controller 150 may be located in processor 110 or some other circuitries. The main memory 150 may comprise various memory devices that provide addressable storage locations which the memory controller 125 may read data from and/or write data to. The main memory 150 may comprise one or more different types of memory devices such as Dynamic Random Access Memory (DRAM) devices, Synchronous DRAM (SDRAM) devices, Double Data Rate (DDR) SDRAM devices, or other memory devices.

The main memory 150 may comprise volatile memory devices such as DRAM-based devices. A volatile memory device needs to be refreshed periodically to prevent loss of data stored therein. Thus, when the computing system 100 loses the AC power supply, measures need to be taken to prevent loss of data stored in a volatile memory device. The power supply (not shown in the figure) provides an indication when the AC power is failing. Such an indication is sent to a power failure handling mechanism 130. Since the inductance and capacitance of the AC power supply may maintain the DC power supply for a short period of time after an AC power failure occurs, the power supply needs to report the AC power failure as soon as the failure occurs so that the power failure handling mechanism may take corresponding measures immediately to prevent any data loss.

Once the power failure handling mechanism 130 is notified of an AC power failure by the power supply, the mechanism may complete any pending memory write operations and flush dirty cache lines back to the main memory 150 within that short period of time during which power is maintained by the inductance and capacitance of the AC power supply. Subsequently, the power failure handling mechanism may put the computing system into a loss-prevention state, under which power to all devices except the main memory may be turned off. The main memory may be powered by a battery pack. In one embodiment, chipset 120 may have logic capable of detecting an AC power failure and notifying the power handling mechanism of the AC power failure.

Although the power failure handling mechanism 130 is shown to be inside the chipset 120, the mechanism may also involve components and/or functions of other devices (e.g., processor 110) in the computing system 100. For example, the power failure handling mechanism 130 may complete any pending memory write operations through a state machine in the processor 110. The power failure handling mechanism may flush dirty cache lines back to the main memory though system management interrupt (SMI) handlers. After the dirty cache lines are flushed back to the main memory, the SMI handlers may put the computing system into the loss-prevention state. Under the loss-prevention state, power to the main memory may be supplied by the battery pack and the memory may perform a self-refresh to maintain data. When the AC power returns, the processor 110 may resume work interrupted by the AC power failure, based on data stored in the main memory.

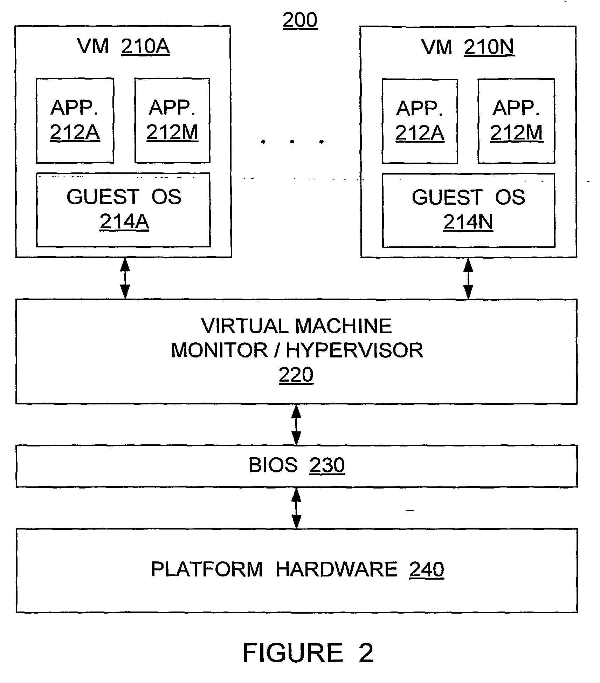

The computing system 100 as shown in Figure 1 may be configured to provide a hardware virtualization environment for an operating system (OS). Figure 2 illustrates an example structure of a hardware virtualization environment 200. Note that the details shown in the figure are not required and systems with different details may be used. The platform hardware 240 comprises hardware in a computing system including devices such as chipset, memory, disk drives, and I/O devices. The platform hardware 240 is capable of executing an OS or a virtual machine monitor (VMM) such as a VMM 220. The VMM 220 provides a software layer to run on the platform hardware to enable the operation of multiple virtual machines (VMs) 210 (e.g., 210A, ..., 210N). Each VM behaves like a complete physical machine that can run its own OS, for example, guest OS 204 (e.g., 214A and 214N). One or more applications (e.g., 212A and 212N) may run on top of each guest OS. Usually, each VM is given the illusion that it is the only physical machine.

The VMM takes control of the system whenever a VM attempts to perform an operation that may affect the operations of other VMs or the hardware (e.g., a system call). The VMM will affect the operation for the VM to ensure the whole computer system is not disrupted. The VMM also has the knowledge of states of components of the platform hardware, and stores the hardware component states in the main memory (e.g., main memory 150 as shown in Figure 1). Different operating systems, or separate instances of the same operating system, may execute in each VM. Since VMs are usually isolated from each other, an OS crashing in one VM usually does not affect the other VMs. Although Figure 2 shows only one VMM, there may be other alternative implementations employing more than one VMM, for example, a VMM may be run within, or on top of, another VMM.

The VMM 220 may utilize aspects of a basic input/output system (BIOS) 230 in a computing system. The BIOS 230 comprises firmware that, when executed, controls various functions (keyboard, disk drives and display screen functions, for example) of the computing system at a basic level. In response to the computing system booting up, a processor of the computing system executes the BIOS to perform a power on self-test to locate, initialize and test devices of the computing system. The BIOS is responsible for loading the operating system. Certain BIOS functions are also used during the operation of the computing system. The BIOS image (i.e., the program code and parameter space that define the BIOS) is stored in a memory that does not lose its stored contents when power to the computing system is removed. For example, the BIOS image may be stored in a FLASH memory, an erasable programmable read only memory (EPROM) that may be rapidly updated. Moreover, functions of the BIOS may be extended to an extensible firmware framework known as the extensible firmware interface (EFI). The EFI is a public industry specification that describes an abstract programmatic interface between platform firmware and shrink-wrap operating systems or other custom application environments. The EFI framework standard includes provisions for extending BIOS functionality beyond that provided by the BIOS code stored in a platform's BIOS device (e.g., flash memory). More particularly, EFI enables firmware, in the form of firmware modules and drivers, to be loaded from a variety of different resources, including primary and secondary flash devices, option ROMs (Read-Only Memory), various persistent storage devices (e.g., magnetic disks, optical disks, etc.), and from one or more computing systems over a computing system network.

When a computing system (e.g., the computing system 100 as shown in Figure 1) loses its AC power, any pending memory write operations may be completed and dirty cache lines may be flushed back to the main memory. Power to the main memory may be maintained using power supplied by a battery pack and the main memory be placed in a low-power self-refresh state. When the AC power returns, the hardware states before the AC power failure occurred may be retrieved from the main memory, since the VMM 220 retains states of hardware components in the computing system in the main memory. The BIOS, which helps reboot the computing system when the AC power returns, may inform the VMM that the AC power failure has occurred and instruct the VMM to retrieve the hardware states from the main memory because the VMM does not have the knowledge of the AC power failure. The VMM may further provide VMs with the retrieved hardware states. Based at least in part on the retrieved hardware states, guest OS's (e.g., 214A) as well as applications (e.g., 212A) running on top of the guest OS's may resume what processing was left when the AC power failure occurred. If the VMM does not have knowledge of states for any hardware components (e.g., those add-in cards), physical resets may be needed for those components and the VMM should be able to handle such resets.

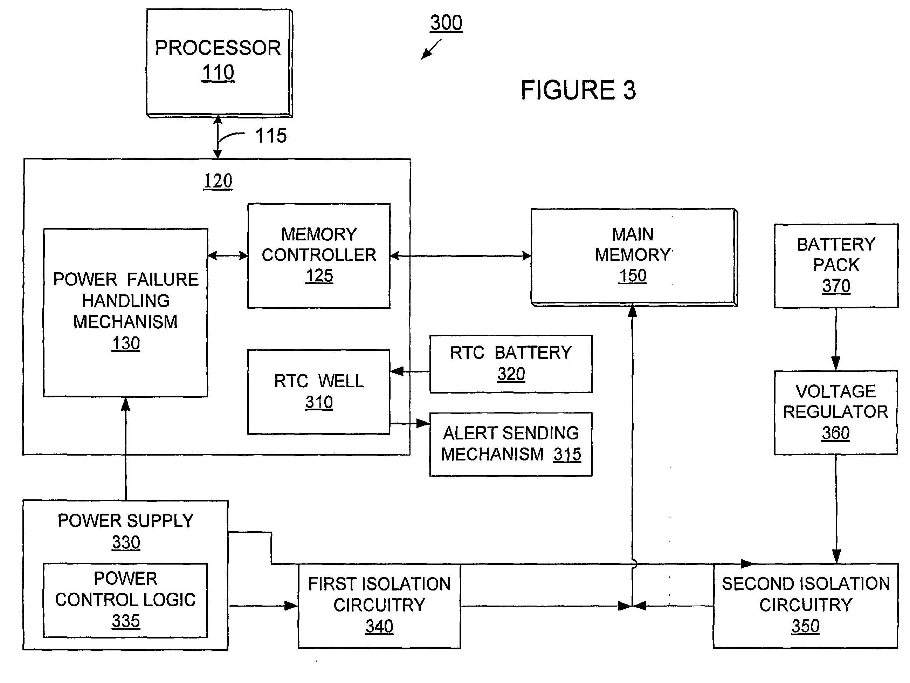

Figure 3 illustrates main functional components in a computing system 300 which may work together to prevent data loss due to power failure. Note that the details shown in the figure are not required and systems with different details may be used. Compared to the computing system 100 as shown in Figure 1, the computing system 300 comprises similar components such as one or more processors 110 coupled to a bus 115 and a chipset 120 also coupled to the bus 115. Similarly, the chipset 120 comprises a memory controller 125 and a power failure handling mechanism 130. In addition to these similar components compared to Figure 1, Figure 3 shows more detailed components related to data loss prevention due to power failure. For example, Figure 3 shows that the computing system 300 includes a power supply 330 to supply power to the computing system. The power supply 330 receives AC power through a power cable connecting to an electrical power outlet. The power supply 330 converts the received AC power to direct current (DC) power, regulates the DC voltage, and supplies the DC power to the processor, the chipset, the main memory, and other components in the computing system 300. Additionally, inductance and capacitance associated with circuitry that performs AC-to-DC conversion and DC voltage regulation may help maintain the output DC voltage of the power supply 330 for a short period of time even after the AC power supply is lost. How long this short period of time can be depends on current drawn from the power supply as well as the inductance and capacitance of the power supply 330.

The power supply may comprise power control logic 335 to immediately detect an AC power loss and inform the power failure handling mechanism 130 of the loss. Subsequently, the power handling mechanism may use a state machine in the processor 110 to complete any pending memory write operations. In the meanwhile, the power handling mechanism may trigger an SMI and flush dirty cache lines back to the main memory through an SMI handler or the state machine. Typically, completing pending memory write operations and flushing dirty cache lines to the main memory may be completed during the short period of time when the output DC voltage is maintained by the inductance and capacitance of the power supply 330. After pending memory write operations are completed and dirty cache lines are flushed back to the main memory, the power failure handling mechanism 130 may trigger another SMI to put the computing system in a loss-prevention state.

Under the loss-prevention state, all components in the computing system 300 may be turned off power except the main memory 150, which will be powered by a battery pack 370. The battery pack only needs to supply enough power to keep data in the main memory refreshed so that the data is not lost. The battery pack 370 may include two or three AA-sized batteries. The battery pack may also include batteries of other types or sizes, and may use either rechargeable or non-rechargeable batteries. Output power voltage of the battery pack may be further regulated by a voltage regulator 360. If a disk drive (not shown) or a processor in the computing system 300 includes a write-back cache, the battery pack may also provide limited power to the write-back cache so that data stored therein can be retained while the AC power is not present. The battery pack 370 may be located inside a case of the computing system. A small panel door may be provided on the case so that a user of the computing system may remove depleted batteries and install fresh batteries inside the battery pack. If the battery pack uses rechargeable batteries, batteries inside the battery pack may be recharged, if necessary, whenever the AC power is present.

Additionally, the computing system 300 may comprise a first isolation circuitry 340, a second isolation circuitry 350, and a third isolation circuitry (not shown). When the computing system is in the loss-prevention state, the first isolation circuitry 340 may prevent current from the battery pack 370 from flowing into the power supply 330 while the second isolation circuitry 350 may let the battery pack 370 provide power to the main memory 150. When the computing system is not in the loss-prevention state (e.g., power supply 330 has AC power supply), the first isolation circuitry 340 may let the power supply 330 provide power to the main memory, while the second isolation circuitry 350 may prevent current from the power supply 330 from flowing into the voltage regulator 360 and the battery pack 370. Also when the computing system is not in the loss-prevention state, the second isolation circuitry 350, when informed by the power control logic 335, may prevent the battery pack 370 from providing any power to the main memory 150. The first isolation circuitry 340 may be a part of or separate from the power supply 330, and the second isolation circuitry 350 may be a part of or separate from the voltage regulator 360. The third isolation circuitry (not shown) may be located between the memory controller 125 and the main memory 150 to prevent the battery pack from supplying power to the memory controller when the system is in the loss-prevention state. The third isolation circuitry may be a part of or separate from the memory controller 125.

The chipset 120 comprises a real-time clock (RTC) well 310 to keep track of the time even when the computing system loses the AC power or is turned off. The RTC well is powered by a RTC battery 320, which is independent from the power supply 330 and the battery pack 370. The RTC well may comprise a counter (not shown) to count the amount of time, such as hours, that the main memory 150 has been powered by the battery pack 370. When the amount of time counted reaches a predetermined threshold, the RTC well may cause an alert sending mechanism 315, coupled to the RTC well, to send out a warning signal so that a user of the computing system may change batteries for the battery pack. The predetermined time threshold depends on specifications of the batteries used. It is estimated that a pack of 3 AA alkaline batteries could provide approximately 75 hours of backup for a 1 GByte memory (typically an AA alkaline battery provides about 2.5 amp-hours of energy and a 512 MByte dual in-line memory module (DIMM) draws about 50 mAmp in its low-power self refresh state). In one embodiment, the alert sending mechanism 315 may be integrated with the RTC well. In another embodiment, the alert sending mechanism 315 may be implemented by a circuitry which is separate from the RTC well.

In one embodiment, to avoid any data loss in the main memory when changing batteries in the battery back while the computing system is in the loss-prevention state, the battery back may comprise space for backup batteries so that new batteries may be placed in the battery pack before the depleted batteries are removed. In the same embodiment or in another embodiment, the computer system may provide an indication of the capacity level of the batteries in the battery pack, either on a screen or through lighting signals, when the AC power supply is present. If the indication shows that the capacity of the batteries is low (even though it is not low enough to trigger an alert signal), a user of the computing system may decide to change the batteries if the batteries are non-rechargeable.

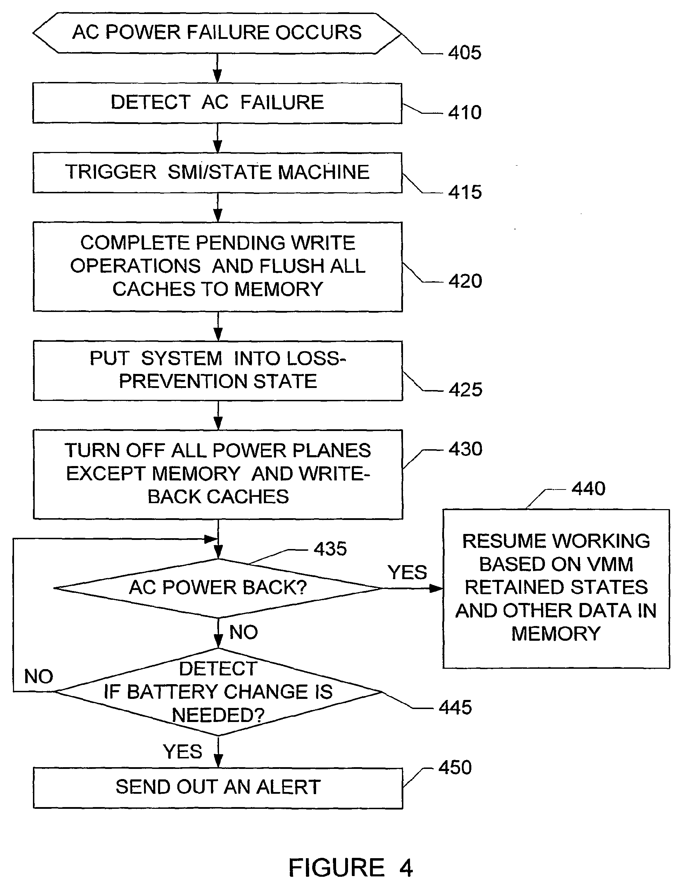

Figure 4 illustrates a flowchart of an example process of preventing data loss due to power failure for a computing system. For the convenience of description, the example process will be described using the computing system 300 as shown in Figure 3, although this example process applies to any other computing systems. The process starts with block 405 where an AC power failure occurs. Assume that a hardware virtualization environment runs on the computing system, states of hardware components in the computing system 300 just before the AC power failure occurs may be stored in the main memory 150. In block 410, the AC power failure may be detected by the power control logic 335. In block 415, a state machine in the processor 110 may be activated and an SMI may be triggered. In block 420, any pending memory write operations may be completed and dirty cache lines may be flushed back to the main memory 150 by the state machine and/or an SMI handler. Subsequently in block 425, the computing system may be put into a loss-prevention state. In block 430, all power planes (for all components in the computing system) may be turned off except the main memory and write-back caches in a processor or a disk drive if such write-back caches exist, which are in self refresh mode and powered by the battery pack 370.

In block 435, the AC power may be monitored to check if it returns. If the AC power returns before the battery pack is depleted, applications and guest OS's running on the computing system may resume what was left when the AC power failure occurred in block 440, based at least in part on the hardware component states retained by the VMM and other data stored in the main memory. If the state of a hardware component is not known to the VMM, this hardware component may be reset when the AC power returns. If the AC power does not return, in block 445 when batteries in the battery pack 370 needs to be changed may be detected. If it is determined that the batteries in the battery pack need to be changed in block 445, an alert signal may be sent out to a user of the computing system to change the batteries to avoid any data loss in the main memory and/or write-back caches in block 450; otherwise, the process goes back to block 435. Fresh batteries may be placed into the battery pack before the depleted batteries are removed to avoid any data loss in the main memory and/or write-back caches while changing batteries.

Although techniques to prevent memory data loss due to AC power failure are described in the context of a hardware virtualization environment, a person of ordinary skill in the art can readily appreciate that the disclosed techniques will be also be adapted to a computing system without running a hardware virtualization environment.

Although an example embodiment of the disclosed techniques is described with reference to diagrams in Figures 1-4, persons of ordinary skill in the art will readily appreciate that many other structures and methods of implementing the present invention may alternatively be used.

In the preceding description, various aspects of the disclosed techniques have been described. For purposes of explanation, specific numbers, systems and configurations were set forth in order to provide a thorough understanding of the present disclosure. However, it is apparent to one skilled in the art having the benefit of this disclosure that the present disclosure may be practiced without the specific details.

Embodiments of the present techniques described herein may be implemented in circuitry, which includes hardwired circuitry, digital circuitry, analog circuitry, programmable circuitry, and so forth. They may also be implemented in computer programs. Such computer programs may be coded in a high level procedural or object oriented programming language. However, the program(s) can be implemented in assembly or machine language if desired. The language may be compiled or interpreted. Additionally, these techniques may be used in a wide variety of networking environments. Such computer programs may be stored on a storage media or device (e.g., hard disk drive, floppy disk drive, read only memory (ROM), CD-ROM device, flash memory device, digital versatile disk (DVD), or other storage device) readable by a general or special purpose programmable processing system, for configuring and operating the processing system when the storage media or device is read by the processing system to perform the procedures described herein. Embodiments of the disclosure may also be considered to be implemented as a machine-readable storage medium, configured for use with a processing system, where the storage medium so configured causes the processing system to operate in a specific and predefined manner to perform the functions described herein.

While the disclosed techniques have been described with reference to illustrative embodiments, this description is not intended to be construed in a limiting sense. Various modifications of the illustrative embodiments, as well as other embodiments of the disclosure, which are apparent to persons skilled in the art to which the disclosure pertains are deemed to lie within the scope of the disclosure.

## Claims

1. A method of operating an apparatus for preventing data loss due to power failure in a computing system (100), comprising:
detecting (410) a power failure of an alternating current AC power supply (330) in the computing system;
after the power failure is detected,
completing (420) pending memory write operations to a main memory (150) of the computing system by using maintained inductance and capacitance of the AC power supply,
flushing dirty cache lines to the main memory by using the maintained inductance and capacitance of the AC power supply; and
putting (425) the computing system in a loss-prevention state after the pending write operations are completed and the dirty cache lines are flushed by turning off (430) power supply for all components in the computing system except the main memory and allowing main memory to be refreshed using batteries (370) .

2. The method of claim 1, wherein the main memory comprises volatile memory, the volatile memory including write-back caches in at least one of a processor and a disk drive.

3. The method of claim 1, further comprising triggering at least one of a state machine and a system management interrupt, SMI, to complete the pending memory write operations and to flush the dirty cache lines to the main memory, after the power failure is detected.

4. The method of claim 1, further comprising restoring a status of the computing system just before the power failure occurs based on data preserved in the main memory when power returns, the preserved data including hardware states just before the power failure occurs.

5. The method of claim 4, wherein the hardware states are retained by a virtual machine monitor, VMM, (220) in the main memory, the VMM providing an operating system with information on hardware in the computing system.

6. The method of claim 5, wherein the VMM restores the hardware states to states just before the power failure occurs and provides the restored hardware states to the operating system, when the power returns.

7. The method of claim 1, the batteries comprise at least two AA-sized batteries.

8. The method of claim 7, further comprising:
detecting (445) when the batteries need to be changed; and sending (450) an alert to a user of the computing system to change the batteries when the batteries need to be changed.

9. An apparatus for preventing data loss due to power failure in a computing system (100), comprising:
a main memory (150) to store data accessible by components in the computing system;
power control logic (335) to detect a power failure of an alternating current, AC, power supply (330) in the computing system;
a power failure handling mechanism (130), when informed by the power control logic of the power failure, to
- complete pending memory write operations to the main memory by using maintained inductance and capacitance of the AC power supply,
- flush dirty cache lines to the main memory by using the maintained inductance and capacitance of the AC power supply,
- put the computing system in a loss-prevention state after completing the pending write operations and flushing the dirty cache lines to the main memory,
- turn off (430) power supply for all components in the computing system except the main memory; and
a battery pack (370) to supply power to the main memory to refresh the data in the main memory to prevent data loss in the main memory, after the pending memory write operations are completed and the dirty cache lines are flushed to the main memory.

10. The apparatus of claim 9, wherein the main memory comprises volatile memory, the volatile memory including write-back caches in at least one of a processor and a disk drive.

11. The apparatus of claim 9, wherein the battery pack comprises at least two AA-sized batteries.

12. The apparatus of claim 9, further comprising:
a memory controller (125), coupled to the main memory, to handle data traffic to and from the main memory;
a first isolation circuitry (340) to prevent current from the battery pack from flowing into a power supply when the battery pack is used to supply power to the main memory after the power failure occurs, the power supply including an alternating current, AC, power supply;
a second isolation circuitry (350) to prevent current from the power supply from flowing into the battery pack when the power supply is used to supply power to the main memory and to prevent the battery pack from providing power to the main memory when the power supply is present; and
a third isolation circuitry to prevent the battery pack from supplying power to the memory controller, when the battery pack is used to supply power to the main memory.

13. The apparatus of claim 9, further comprising a voltage regulator (360) to regulate output power voltage provided by the battery pack.

14. The apparatus of claim 9, further comprising:
a real-time clock well (310), the real-time clock well including a counter to count time during which the main memory is powered by the battery pack; and
an alert sending mechanism (315), coupled to the real-time clock well, to send out a warning of replacing batteries in the battery pack when the counted time exceeds a pre-determined limit, the pre-determined limit set based on specifications of the batteries used in the battery pack.

15. The apparatus of claim 9, wherein the power failure handling mechanism completes the pending write operations and flushes the dirty cache lines to the main memory by using at least one of a state machine and at least one system management interrupt, SMI, handler.

16. An article comprising a storage medium having stored thereon instructions that, when executed by a processor result in a computer apparatus carrying out all of the steps of a method as claimed in any one of claims 1 to 8.

## Patentansprüche

1. Verfahren zum Betreiben eines Geräts zur Verhinderung von Datenverlust wegen eines Stromausfalls in einem Computersystem (100), wobei:
ein Stromausfall einer Wechselstrom-Leistungsversorgung (330) in dem Computersystem erfasst (410) wird,
nach Erfassung des Stromausfalls
laufende Speicher-Schreiboperationen in einem Hauptspeicher (150) des Computersystems vollendet (420) werden, indem die erhaltene Induktivität und Kapazität der Wechselstrom-Leistungsversorgung genutzt wird,
verstopfte Cache-Leitungen zu dem Hauptspeicher geleert werden, indem die aufrechterhaltene Induktivität und Kapazität der Wechselstrom-Leistungsversorgung genutzt wird, und
das Computersystem in einen Verlust-Verhinderungszustand versetzt (425) wird, nachdem laufende Schreiboperationen vollendet und die verstopften Cache-Leitungen geleert wurden, indem die Leistungsversorgung für alle Komponenten in dem Computersystem bis auf den Hauptspeicher abgeschaltet (430) und ein Auffrischen des Hauptspeichers unter Verwendung von Batterien (370) ermöglicht wird.

2. Verfahren nach Anspruch 1, wobei der Hauptspeicher einen flüchtigen Speicher enthält, der Rückschreibe-Cachespeicher in einem Prozessor und/oder einem Plattenlaufwerk aufweist.

3. Verfahren nach Anspruch 1, wobei eine Zustandsmaschine und/oder eine System-Management-Unterbrechung, SMI, ausgelöst wird, um die laufenden Speicher-Schreiboperationen zu vollenden und die verstopften Cache-Leitungen zu dem Hauptspeicher zu leeren, nachdem der Stromausfall erfasst wurde.

4. Verfahren nach Anspruch 1, wobei ferner bei Wiederherstellung der Stromversorgung ein Status des Computersystems zu einem Zeitpunkt unmittelbar vor dem Stromausfall auf Grundlage von Daten wiederhergestellt wird, die in dem Hauptspeicher aufbewahrt wurden, wobei die aufbewahrten Daten Hardware-Zustände unmittelbar vor dem Stromausfall aufweisen.

5. Verfahren nach Anspruch 4, wobei die Hardware-Zustände durch einen virtuellen Gerätemonitor, VMM, (220) in dem Hauptspeicher gehalten werden, wobei der VMM ein Betriebssystem mit Informationen bezüglich der Hardware in dem Computersystem versorgt.

6. Verfahren nach Anspruch 5, wobei der VMM die Hardware-Zustände so wiederherstellt, wie sie unmittelbar vor dem Stromausfall bestanden haben und die wiederhergestellten Hardware-Zustände für das Betriebssystem bereitstellt, wenn die Stromversorgung wiederhergestellt ist.

7. Verfahren nach Anspruch 1, wobei die Batterien wenigstens zwei AA-Typ-Batterien aufweisen.

8. Verfahren nach Anspruch 7, wobei ferner:
erfasst (445) wird, wenn die Batterien ausgewechselt werden müssen; und
eine Warnung zum Austausch der Batterien an einen Benutzer des Computersystems gesendet (450) wird, wenn die Batterien ausgetauscht werden müssen.

9. Gerät zum Verhindern eines Datenverlustes aufgrund eines Stromausfalls in einem Computersystem (100), mit:
einem Hauptspeicher (150) zum Speichern von Daten, auf die durch Komponenten in dem Computersystem zugegriffen werden kann;
einer Leistungssteuerungslogik (335) zum Erfassen eines Stromausfalls einer Wechselstrom-Leistungsversorgung (330) in dem Computersystem;
einem Stromausfall-Handhabungsmechanismus (130), der bei Mitteilung eines Stromausfalls durch die Leistungssteuerungslogik dazu ausgelegt ist,
laufende Speicher-Schreiboperationen in dem Hauptspeicher zu vollenden, indem eine aufrechterhaltene Induktivität und Kapazität der Wechselstrom-Leistungsversorgung verwendet wird,
verstopfte Cache-Leitungen zu dem Hauptspeicher durch Verwendung der erhaltenen Induktivität und Kapazität der Wechselstrom-Leistungsversorgung zu leeren,
das Computersystem in einen Verlustverhinderungszustand zu versetzen, nachdem die laufenden Schreiboperationen vollendet und die verstopften Cache-Leitungen zu dem Hauptspeicher geleert wurden,
die Leistungsversorgung für alle Komponenten in dem Computersystem bis auf den Hauptspeicher abzuschalten (430); und
einem Batteriepaket (370) zur Leistungsversorgung des Hauptspeichers, um die Daten in dem Hauptspeicher aufzufrischen, so daß Datenverlust in dem Hauptspeicher verhindert wird, nachdem die laufenden Speicher-Schreiboperationen vollendet und die verstopften Cache-Leitungen zu dem Hauptspeicher geleert wurden.

10. Gerät nach Anspruch 9, wobei der Hauptspeicher einen flüchtigen Speicher enthält, der Rückschreibe-Cachespeicher in einem Prozessor und/oder einem Plattenlaufwerk aufweist.

11. Gerät nach Anspruch 9, wobei das Batteriepaket wenigstens zwei AA-Typ-Batterien aufweist.

12. Gerät nach Anspruch 9, ferner mit:
einem Speicher-Controller (125), der an den Hauptspeicher angeschlossen ist, um den Datenverkehr zu und von dem Hauptspeicher zu verwalten;
einer ersten Trennschaltung (340), um zu verhindern, dass Strom von dem Batteriepaket in die Leistungsversorgung fließt, wenn das Batteriepaket zur Leistungsversorgung des Hauptspeichers verwendet wird, nachdem ein Stromausfall aufgetreten ist, wobei die Leistungsversorgung eine Wechselstrom-Leistungsversorgung aufweist;
einer zweiten Trennschaltung (350), um zu verhindern, dass Strom von der Leistungsversorgung in das Batteriepaket fließt, wenn die Leistungsversorgung zur Leistungsversorgung des Hauptspeichers verwendet wird, und um zu verhindern, dass das Batteriepaket Leistung zu dem Hauptspeicher liefert, wenn die Leistungsversorgung vorhanden ist; und
einer dritten Trennschaltung, um zu verhindern, dass das Batteriepaket Leistung zu dem Speicher-Controller schickt, wenn das Batteriepaket zur Leistungsversorgung des Hauptspeichers verwendet wird.

13. Gerät nach Anspruch 9, ferner mit einem Spannungsregulator (360), um die durch das Batteriepaket gelieferte Ausgabespannung zu regulieren.

14. Gerät nach Anspruch 9, ferner mit:
einem Echtzeittaktgeber (310), der einen Zähler zum Feststellen der Zeit, während der der Hauptspeicher durch das Batteriepaket versorgt wird, aufweist; und
einem Warnungssendemechanismus (315), der an den Echtzeittaktgeber angeschlossen ist, um eine Warnung zum Ersetzen der Batterien in dem Batteriepaket auszusenden, wenn die festgestellte Zeit einen vorbestimmten Grenzwert überschreitet, der auf Grundlage von Spezifikationen der in dem Batteriepaket verwendeten Batterien eingestellt ist.

15. Gerät nach Anspruch 9, wobei der Stromausfall-Handhabungsmechanismus die laufenden Schreiboperationen vollendet und die verstopften Cache-Leitungen zu dem Hauptspeicher leert, indem eine Zustandsmaschine und/oder wenigstens ein Handhabungsgerät einer System-Management-Unterbrechung, SMI, verwendet werden.

16. Gegenstand mit einem Speichermedium, auf dem Befehle gespeichert sind, die bei Ausführung durch einen Prozessor in einem Computergerät resultieren, das alle Schritte eines Verfahrens nach einem der Ansprüche 1 bis 8 ausführt.

## Revendications

1. Procédé pour faire fonctionner un appareil afin d'empêcher une perte de données due à une panne d'alimentation dans un système informatique (100), comprenant :
la détection (410) d'une panne d'alimentation d'une alimentation (330) en énergie à courant alternatif dans le système informatique ;
après que la panne d'alimentation a été détectée,
l'achèvement (420) d'opérations en cours d'écriture en mémoire dans une mémoire principale (150) du système informatique en utilisant une inductance et une capacité entretenues de l'alimentation en énergie à courant alternatif,
la purge de lignes d'antémémoire erronées vers la mémoire principale en utilisant l'inductance et la capacité entretenues de l'alimentation en énergie à courant alternatif ; et
la mise (425) du système informatique dans un état de prévention de perte après l'achèvement des opérations d'écriture en cours et la purge des lignes d'antémémoire incorrectes en arrêtant (430) l'alimentation en énergie de tous les composants dans le système informatique à l'exception de la mémoire principale et en permettant à la mémoire principale d'être rafraichie par l'utilisation de piles (370).

2. Procédé selon la revendication 1, dans lequel la mémoire principale comprend une mémoire volatile, la mémoire volatile comprenant des antémémoires à écriture différée dans au moins l'un d'un processeur et d'une unité de disque.

3. Procédé selon la revendication 1, comprenant en outre le déclenchement d'au moins une machine à états et d'une interruption de gestion du système, SMI (pour System Management Interrupt), pour achever les opérations en cours d'écriture en mémoire et pour purger les lignes d'antémémoire erronées vers la mémoire principale, après la détection de la panne d'alimentation.

4. Procédé selon la revendication 1, comprenant en outre la restauration d'un état du système informatique juste avant que la panne d'alimentation se produise sur la base de données préservées dans la mémoire principale lors du rétablissement de l'alimentation, les données préservées comprenant des états matériels présents juste avant que la panne d'alimentation se produise.

5. Procédé selon la revendication 4, dans lequel les états matériels sont retenus par un moniteur de machine virtuel, VMM (pour Virtual Machine Monitor), (220) dans la mémoire principale, le VMM fournissant à un système d'exploitation des informations portant sur le matériel dans le système informatique.

6. Procédé selon la revendication 5, dans lequel le VMM rétablit les états matériels en des états présents juste avant que la panne d'alimentation se produise et fournit les états matériels rétablis au système d'exploitation, lorsque l'alimentation reprend.

7. Procédé selon la revendication 1, dans lequel les piles comprennent au moins deux piles de format AA.

8. Procédé selon la revendication 7, comprenant en outre :
la détection (445) du moment où les piles doivent être changées ; et l'envoi (450) d'une alerte à un utilisateur du système informatique pour changer les piles lorsque les piles doivent être changées.

9. Appareil pour empêcher la perte de données due à une panne d'alimentation dans un système informatique (100), comportant :
une mémoire principale (150) destinée à stocker des données accessibles par des composants dans le système informatique ;
une logique de commande d'alimentation (335) destinée à détecter une panne d'alimentation d'une alimentation (330) en énergie à courant alternatif dans le système informatique ;
un mécanisme (130) de gestion de panne d'alimentation destiné, lorsqu'il est informé par la logique de commande d'alimentation de la panne d'alimentation, à
- achever des opérations en cours d'écriture en mémoire dans la mémoire principale en utilisant une inductance et une capacité entretenues de l'alimentation en énergie à courant alternatif,
- purger des lignes d'antémémoire erronées vers la mémoire principale en utilisant l'inductance et la capacité entretenues de l'alimentation en énergie à courant alternatif,
- placer le système informatique dans un état de prévention de perte après l'achèvement des opérations d'écriture en cours et de la purge des lignes d'antémémoire erronées vers la mémoire principale,
- arrêter (430) l'alimentation en énergie de tous les composants dans le système informatique à l'exception de la mémoire principale ; et
un bloc de piles (370) destiné à fournir de l'énergie à la mémoire principale pour rafraichir les données dans la mémoire principale afin d'éviter une perte de données dans la mémoire principale, après l'achèvement des opérations en cours d'écriture en mémoire et la purge des lignes d'antémémoire erronées vers la mémoire principale.

10. Appareil selon la revendication 9, dans lequel la mémoire principale comprend une mémoire volatile, la mémoire volatile comprenant des antémémoires à écriture différée dans au moins l'un d'un processeur et d'une unité de disque.

11. Appareil selon la revendication 9, dans lequel le bloc de piles comprend au moins deux piles de format AA.

12. Appareil selon la revendication 9, comportant en outre :
un contrôleur de mémoire (125) couplé à la mémoire principale pour gérer un trafic de données vers et à partir de la mémoire principale ;
un premier circuit d'isolation (340) destiné à empêcher un courant provenant du bloc de piles d'affluer dans une alimentation en énergie lorsque le bloc de piles est utilisé pour alimenter en énergie la mémoire principale après que la panne d'alimentation s'est produite, l'alimentation en énergie comprenant une alimentation en énergie à courant alternatif ;
un deuxième circuit d'isolation (350) destiné à empêcher un courant provenant de l'alimentation en énergie d'affluer dans le bloc de piles lorsque l'alimentation en énergie est utilisée pour alimenter en énergie la mémoire principale, et à empêcher le bloc de piles de fournir de l'énergie à la mémoire principale lorsque l'alimentation en énergie est présente ; et
un troisième circuit d'isolation destiné à empêcher le bloc de piles de fournir de l'énergie au contrôleur de mémoire lorsque le bloc de piles est utilisé pour alimenter en énergie la mémoire principale.

13. Appareil selon la revendication 9, comportant en outre un régulateur de tension (360) destiné à réguler la tension d'alimentation de sortie fournir par le bloc de piles.

14. Appareil selon la revendication 9, comportant en outre :
un puits d'horloge en temps réel (310), le puits d'horloge en temps réel comprenant un compteur destiné à compter le temps pendant lequel la mémoire principale est alimentée par le bloc de piles ; et
un mécanisme (315) d'envoi d'alerte, couplé au puits d'horloge en temps réel, pour envoyer vers l'extérieur un avertissement de remplacement des piles dans le bloc de piles lorsque le temps compté dépasse une limite prédéterminée, la limite prédéterminée étant établie sur la base de spécifications des piles utilisées dans le bloc de piles.

15. Appareil selon la revendication 9, dans lequel le mécanisme de traitement de panne d'alimentation achève les opérations d'écriture en cours et purge les lignes d'antémémoire erronées vers la mémoire principale en utilisant au moins l'une d'une machine à états et d'au moins une unité de traitement d'interruption pour la gestion du système, SMI.

16. Article comportant un support de stockage sur lequel sont stockées des instructions qui, lorsqu'elles sont exécutées par un processeur, amènent un appareil informatique à mettre en oeuvre la totalité des étapes d'un procédé tel que revendiqué dans l'une quelconque des revendications 1 à 8.
